(19) Europäisches Patentamt

European Patent Office

Office européen des brevets

(11) **EP 4 462 026 A1**

(12) **EUROPEAN PATENT APPLICATION**

(43) Date of publication:
**13.11.2024 Bulletin 2024/46**

(21) Application number: **24155653.9**

(22) Date of filing: **05.02.2024**

(51) International Patent Classification (IPC):
**F24C 7/08** (2006.01)　　　**G06T 7/90** (2017.01)

(52) Cooperative Patent Classification (CPC):
**F24C 7/085; G06T 11/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.05.2023　KR 20230061251**

(71) Applicant: **LG Electronics Inc.
Yeongdeungpo-gu
Seoul 07336 (KR)**

(72) Inventors:
• **RYU, Eunkyung
Seoul 06772 (KR)**
• **DO, Hoseok
Seoul 06772 (KR)**

(74) Representative: **Vossius & Partner
Patentanwälte Rechtsanwälte mbB
Siebertstrasse 3
81675 München (DE)**

(54) **COOKING DEVICE AND OPERATING METHOD THEREOF**

(57)　　A cooking device according to an embodiment of the present disclosure may comprise: a display unit, a cooking chamber, a heating unit configured to heat the cooking chamber, a camera configured to capture a food located inside the cooking chamber and a processor configured to generate a plurality of expected images representing a cooking progress stage of the food from the image of the food captured by the camera using an image generation model that generates a changed image by manipulating a numerical value of the image attribute, display the plurality of expected images of on the display and control the heating unit to cook the food using cooking information matched to the selected expected image according to a command for selecting one of the plurality of expected images.

## FIG. 4

```
capture image of food of cooking chamber ── S401
        │
acquire a plurality of expected images for each cooking
progress stage of the food from the captured image ── S403
        │
display a plurality of expected images ── S405
        │
receive a command to select one
of a plurality of expected images ── S407
        │
cook food using cooking information
corresponding to the selected expected image ── S409
        │
compare the selected expected image
with the image of the food being cooked ── S411
        │
determine that similar?(S413) ── NO (loop back)
        │ YES
output a cooking completion notification ── S415
```

EP 4 462 026 A1

Processed by Luminess, 75001 PARIS (FR)

**Description**

[Technical Field]

The present disclosure relates to a cooking device, and more particularly, to a cooking device for providing an expected cooking status of food.

[Background Art]

A cooking device refers to a device or a home appliance for cooking by applying heat to a cooking object to be cooked. A cooking device using heat such as an oven is an essential home appliance in daily life.

In a situation where cooking is made using a cooking device, it is common for a person to continuously check a state or set a temperature and time to cook.

In addition, if food is cooked using a cooking device, an existing cooking image or an image on the Internet is provided as an image of an expected completion of cooking of the food.

However, in the prior art, only a uniform image of completion of cooking was provided, and thus, the degree of cooking desired by the user was not specifically predicted.

Accordingly, there is a problem in that the cooking process of the food or the predicted result after cooking is not properly displayed, which does not meet the user's cooking needs.

[Disclosure]

[Technical Problem]

An object of the present disclosure is to provide an expected image of food indicating a cooking state while maintaining the identity of the food.

An object of the present disclosure is to provide an expected image in which cooking degree characteristics are changed while maintaining the sameness of food.

[Technical Solution]

According to an embodiment of the present disclosure, a cooking device includes a display unit, a cooking chamber, a heating unit configured to heat the cooking chamber, a camera configured to capture a food located inside the cooking chamber and a processor configured to generate a plurality of expected images representing a cooking progress stage of the food from the image of the food captured by the camera using an image generation model that generates a changed image by manipulating a numerical value of the image attribute, display the plurality of expected images of on the display and control the heating unit to cook the food using cooking information matched to the selected expected image according to a command for selecting one of the plurality of expected images.

According to an embodiment of the present disclosure, an operating method of the cooking device comprises capturing a food located inside the cooking chamber, generating a plurality of expected images indicating a cooking progress stage of the food from the captured image of the food by using an image generation model that generates a changed image by manipulating numerical values of attributes of the image, displaying a plurality of generated expected images and cooking the food using cooking information matching the expected image selected according to a command for selecting one of the plurality of expected images.

[Advantageous Effects]

According to an embodiment of the present disclosure, there is an advantage that a customer can more accurately select a desired degree of cooking.

In addition, even if the type of food is the same, regardless of the shape or size of the food, it is possible to prevent a uniform expected image from being provided because expected images having a changed cooking degree characteristic are provided.

[Description of Drawings]

Fig. 1 is a block diagram illustrating a cooking device according to an exemplary embodiment of the present disclosure.

FIG. 2 is a perspective view of a cooking device according to an embodiment of the present disclosure.

FIG. 3 is a perspective view illustrating a state in which a door is opened in the cooking device of FIG. 2;

FIG. 4 is a flowchart illustrating a method of operating a cooking device according to an exemplary embodiment of the present disclosure.

FIG. 5A is a diagram illustrating the configuration of an image generation unit according to an embodiment of the present disclosure.

FIG. 5B is a process of generating a plurality of expected images corresponding to a plurality of cooking steps from a food image according to an embodiment of the present disclosure. It is a drawing explaining

FIGS. 6A to 6F are diagrams illustrating examples of displaying a plurality of expected images and cooking information according to an embodiment of the present disclosure.

FIG. 7 is a diagram for explaining an example of providing sub-expected images that are more segmented according to selection of an expected image according to an embodiment of the present disclosure.

FIG. 8 is a diagram illustrating a cooking completion notification according to an embodiment of the present disclosure.

FIG. 9 is a diagram for explaining an example of displaying a cooking state for a current cooking step according to an embodiment of the present disclosure.

FIG. 10 is a diagram for explaining information provided if an expected cooking time corresponding to an expected image is changed according to an embodiment of the present disclosure.

FIGS. 11A and 11B are diagrams illustrating output information if a cooking failure situation occurs according to an embodiment of the present disclosure.

FIG. 12 is a ladder diagram for explaining an operating method of a cooking system according to an embodiment of the present disclosure.


[Best Mode]


Hereinafter, embodiments relating to the present disclosure will be described in detail with reference to the drawings. The suffixes "module" and "unit" for components used in the description below are assigned or mixed in consideration of easiness in writing the specification and do not have distinctive meanings or roles by themselves. Hereinafter, the embodiments disclosed in this specification will be described in detail with reference to the accompanying drawings, but the same or similar elements are given the same reference numerals regardless of reference numerals, and redundant description thereof will be omitted. The suffixes 'module' and 'unit' for the components used in the following description are given or used together in consideration of ease of writing the specification, and do not have meanings or roles that are distinct from each other by themselves. In addition, in describing the embodiments disclosed in this specification, if it is determined that a detailed description of a related known technology may obscure the gist of the embodiment disclosed in this specification, the detailed description thereof will be omitted. In addition, the accompanying drawings are only for easy understanding of the embodiments disclosed in this specification, the technical idea disclosed in this specification is not limited by the accompanying drawings, and all changes included in the technical scope of the present disclosure, it should be understood to include equivalents or substitutes.

Terms including ordinal numbers, such as first and second, may be used to describe various components, but the components are not limited by the terms. These terms are only used for the purpose of distinguishing one component from another.

It is understood that if a component is referred to as being 'connected' or 'connected' to another component, it may be directly connected or connected to the other component, but other components may exist in the middle. It should be. On the other hand, if a component is referred to as being 'directly connected' or 'directly connected' to another component, it should be understood that no other component exists in the middle.

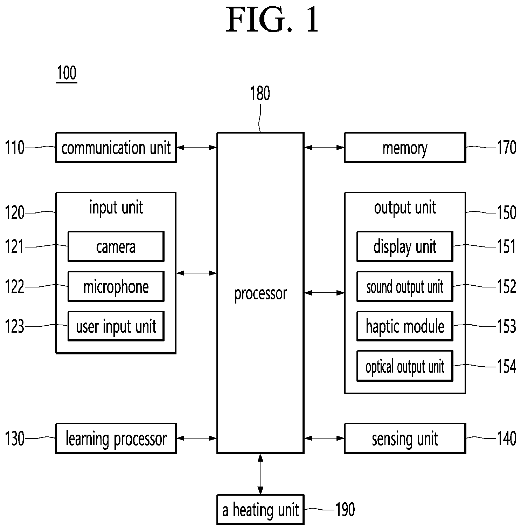

FIG. 1 is a block diagram illustrating a cooking device according to an exemplary embodiment of the present disclosure.

Referring to FIG. 1, the cooking device 100 may include a communication unit 110, an input unit 120, a learning processor 130, a sensing unit 140, an output unit 150, a memory 170, a processor 180, and a heating unit 190 may be included.

The communication unit 110 may transmit/receive data with external devices such as other AI devices or AI servers using wired/wireless communication technology. For example, the communication unit 110 may transmit/receive sensor information, a user input, a learning model, a control signal, and the like with external devices.

At this time, communication technologies used by the communication unit 110 include Global System for Mobile communication (GSM), Code Division Multi Access (CDMA), Long Term Evolution (LTE), 5G, Wireless LAN (WLAN), and Wi-Fi (Wireless-Fidelity), Bluetooth™, Radio Frequency Identification (RFID), Infrared Data Association (IrDA), Zig-Bee, and Near Field Communication (NFC).

The communication unit 110 may also be referred to as a communication modem or a communication circuit.

The input unit 120 may acquire various types of data.

At this time, the input unit 120 may include a camera for inputting a video signal, a microphone for receiving an audio signal, and a user input unit for receiving information from a user. Here, a camera or microphone may be treated as a sensor, and signals obtained from the camera or microphone may be referred to as sensing data or sensor information.

The input unit 120 may obtain learning data for model learning and input data to be used when obtaining an output using the learning model. The input unit 120 may obtain raw input data, and in this case, the processor 180 or the learning processor 130 may extract input feature as preprocessing of the input data.

The input unit 120 may include a camera 121 for inputting a video signal, a microphone 122 for receiving an audio signal, and a user input unit 123 for receiving information from a user.

Voice data or image data collected by the input unit 120 may be analyzed and processed as a user's control command.

The input unit 120 is for inputting image information (or signal), audio information (or signal), data, or information input from a user. For inputting image information, the cooking device 100 may include one or a plurality of cameras 121 may be provided.

The camera 121 processes an image frame such as a still image or a moving image obtained by an image sensor in a video call mode or a capturing mode. The processed image frame may be displayed on the display unit 151 or stored in the memory 170.

The microphone 122 processes external sound signal into electrical voice data. The processed voice data may be used in various ways according to the function (or application program being executed) being performed in the cooking device 100. Meanwhile, various noise cancellation algorithms may be applied to the microphone 122 to remove noise generated in the process of receiving an external sound signal.

The user input unit 123 is for receiving information from a user, if information is input through the user input unit 123, the processor 180 may control the operation of the cooking device 100 to correspond to the input information.

The user input unit 123 is a mechanical input means (or a mechanical key, for example, a button located on the front/rear or side of the cooking device 100, a dome switch, a jog wheel, a jog switch, etc.) and a touch input means. As an example, the touch input means consists of a virtual key, soft key, or visual key displayed on a touch screen through software processing, or a part other than the touch screen. It can be made of a touch key (touch key) disposed on.

The learning processor 130 may learn a model composed of an artificial neural network using training data. Here, the learned artificial neural network may be referred to as a learning model. The learning model may be used to infer a result value for new input data other than learning data, and the inferred value may be used as a basis for a decision to perform a certain operation.

At this time, the learning processor 130 may perform AI processing together with the learning processor of the AI server.

In this case, the learning processor 130 may include a memory integrated or implemented in the cooking device 100. Alternatively, the learning processor 130 may be implemented using the memory 170, an external memory directly coupled to the cooking device 100, or a memory maintained in an external device.

The sensing unit 140 may obtain at least one of internal information of the cooking device 100, surrounding environment information of the cooking device 100, and user information by using various sensors.

The sensors included in the sensing unit 140 include a proximity sensor, an illuminance sensor, an acceleration sensor, a magnetic sensor, a gyro sensor, an inertial sensor, an RGB sensor, an IR sensor, a fingerprint recognition sensor, an ultrasonic sensor, an optical sensor, a microphone, a LiDAR sensor and radar, etc.

The output unit 150 may generate an output related to sight, hearing, or touch.

The output unit 150 may include a display unit that outputs visual information, a speaker that outputs auditory information, and a haptic module that outputs tactile information.

The output unit 150 may include at least one of a display unit 151, a sound output unit 152, a haptic module 153, and an optical output unit 154.

The display unit 151 displays (outputs) information processed by the cooking device 100. For example, the display unit 151 may display execution screen information of an application program driven by the cooking device 100 or UI (User Interface) and GUI (Graphic User Interface) information according to such execution screen information.

The display unit 151 may implement a touch screen by forming a mutual layer structure or integrally with the touch sensor. Such a touch screen may function as a user input unit 123 providing an input interface between the cooking device 100 and the user, and may provide an output interface between the terminal 100 and the user.

The audio output unit 152 may output audio data received from the communication unit 110 or stored in the memory 170 in reception of a call signal, communication mode or recording mode, voice recognition mode, or broadcast reception mode.

The sound output unit 152 may include at least one of a receiver, a speaker, and a buzzer.

The haptic module 153 generates various tactile effects that a user can feel. A representative example of the tactile effect generated by the haptic module 153 may be vibration.

The light output unit 154 outputs a signal for notifying occurrence of an event using light from a light source of the cooking device 100. Examples of event occurring in the cooking device 100 may include message reception, call signal reception, missed calls, alarms, schedule notifications, e-mail reception, and information reception through applications.

The memory 170 may store data supporting various functions of the cooking device 100. For example, the memory 170 may store input data obtained from the input unit 120, learning data, a learning model, a learning history, and the like.

The processor 180 may determine at least one executable operation of the cooking device 100 based on information determined or generated using a data analysis algorithm or a machine learning algorithm. Also, the processor 180 may perform the determined operation by controlling components of the cooking device 100.

To this end, the processor 180 may request, retrieve, receive, or utilize data from the learning processor 130 or the memory 170, control components of the cooking device 100 for performing a predicted operation or an operation determined to be desirable among the at least one executable operation.

In this case, the processor 180 may generate a control signal for controlling the external device and transmit the generated control signal to the external device if it is necessary to link the external device to perform the determined operation.

The processor 180 may obtain intention information for a user input and determine a user's requirement based on the acquired intention information.

At this time, the processor 180 uses at least one of a STT (Speech To Text) engine for converting a voice input into a character string and a Natural Language Processing (NLP) engine for obtaining intention information of a natural language, and Intent information corresponding to the input may be obtained.

At this time, at least one or more of the STT engine or NLP engine may be composed of an artificial neural network at least partially trained according to a machine learning algorithm. And, at least one or more of the STT engine or the NLP engine may be learned by the learning processor 130, learned by the learning processor of the AI server, or learned by distributed processing thereof.

The processor 180 collects and stores history information including user feedback on the contents of operation or operation of the cooking device 100 and stores it in the memory 170 or the learning processor 130, or in an external device such as an AI server, can transmit The collected history information can be used to update the learning model.

The processor 180 may control at least some of the components of the cooking device 100 to drive an application program stored in the memory 170. Furthermore, the processor 180 may combine and operate two or more of the components included in the cooking device 100 to drive the application program.

The heating unit 190 may generate heat using supplied energy.

The heating unit 190 may generate heat using supplied electricity and heat the inside of the cooking device 100 using the generated heat.

The heating unit 190 may be provided inside the cooking chamber 12. The heating unit 190 may be disposed at a side end or a lower end of the cooking chamber 12.

The heating unit 190 may include a circuit that converts electrical energy into thermal energy.

Hereinafter, the cooking device 100 may also be referred to as an artificial intelligence cooking device 100 or an artificial intelligence oven.

Also, if the cooking device 100 is provided in a form attached to a wall, it may be referred to as a wall oven.

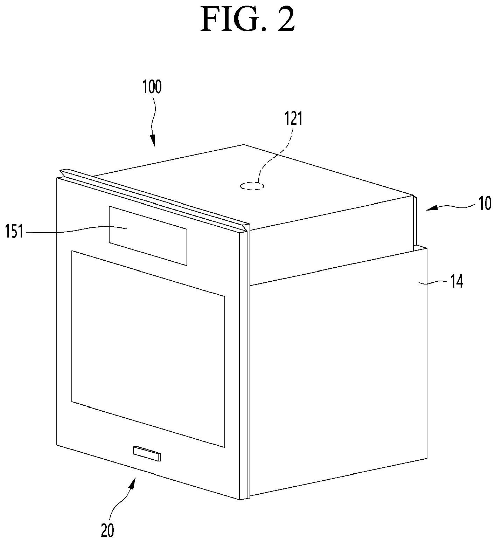

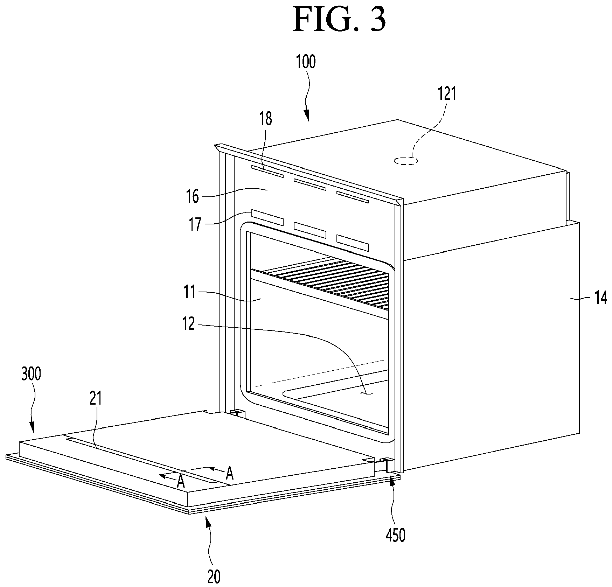

FIG. 2 is a perspective view of a cooking device according to an embodiment of the present disclosure, and FIG. 3 is a perspective view showing a door of the cooking device of FIG. 2 in an open state.

The cooking device 100 may include a main body 10 accommodating various components therein.

The main body 10 may include an inner frame 11 forming a cooking chamber 12 and an outer frame 14 surrounding the inner frame 11 outside the inner frame 11.

A camera 121 may be provided at an upper end of the inner frame 11. The camera 121 may capture the cooking chamber 12. The captured image may be used to recognize ingredients being cooked.

A body panel 16 may be provided at the front end of the inner frame 11.

The body panel 16 may be coupled to the front end of the inner frame 11 or integrally formed with the front end.

The door 20 may be rotatably connected to the main body 10 by a hinge mechanism 450.

For example, the hinge mechanism 450 may be connected to the lower end of the door 20.

In order to minimize a temperature rise due to heat supplied to the cooking chamber 12, air outside the door 20 may flow into the door 20.

Therefore, the door 20 includes a door air outlet 21 through which the air flows out from inside the door (20), and the body 10 may include a body air inlet 17 flowed in the air flowed out through the door air outlet 21.

The body air inlet 17 may be formed in the body panel 16.

In addition, the air flowed into the body 10 through the body air inlet 17 may be flowed out the outside of the body 10 through the body air outlet 18 after flowing through the body 10.

A body air outlet 18 may also be formed in the body panel 16.

The door 20 may further include a control device 300.

The control device 300 is located on the upper side of the door 20, but is not limited thereto, and may be positioned to face the portion of the body panel 16 located on the upper side of the cooking chamber 12 in a state that the door 20 is closed.

The control device 300 may include one or more of a display unit 151 and a user input unit 123.

The display unit 151 may be implemented in the form of a touch screen capable of receiving a touch input.

Operation information of the cooking device 100 may be displayed and/or a user's operation command may be received through the control device 300.

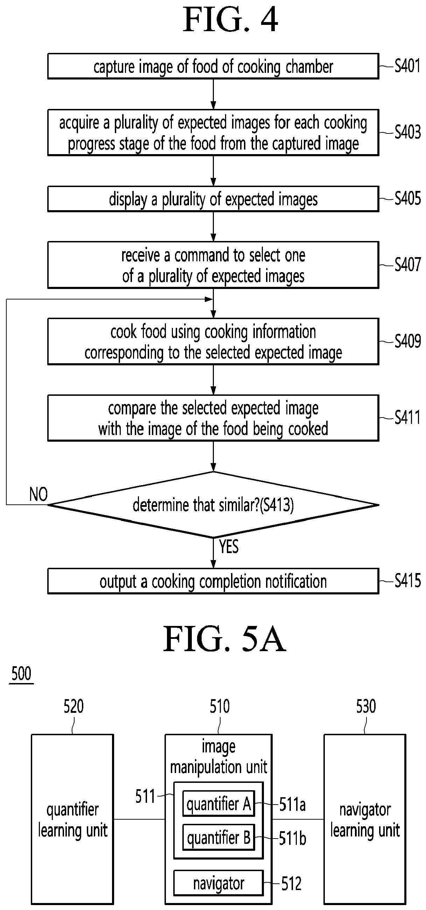

FIG. 4 is a flowchart illustrating a method of operating a cooking device according to an exemplary embodiment of the present disclosure.

Referring to FIG. 4, the processor 180 of the cooking device 100 may capture an image of food through the camera 121 (S401).

In one embodiment, if food is stored in the cooking compartment 12, the processor 180 may turn on the camera 121 to capture the interior of the cooking compartment 12.

In another embodiment, the processor 180 may turn on the operation of the camera 121 if receiving a cooking start command.

The processor 180 may acquire a plurality of expected images for each cooking progress stage of the food from the captured image using the image generation unit (S403).

The image generation unit may be an image generation model that quantifies the attribute of the image and generates a plurality of expected images by manipulating the image according to manipulation of the corresponding numerical value.

The image generation unit may be a model for identifying the type of food from the image and generating expected images for each cooking step corresponding to the type of the identified food.

Each of the plurality of cooking steps may indicate a step according to a progress level of cooking.

In one embodiment, a plurality of cooking steps may be separated by a certain period of time.

In another embodiment, the plurality of cooking steps may be classified according to the degree of cooking of the food.

In another embodiment, each of the plurality of cooking steps may be a step within an ingestible range of food.

Corresponding cooking information may be matched with the expected image. The cooking information may include one or more of cooking temperature, cooking time, and degree of cooking.

The image generation model (image generation unit) may be learned by the artificial intelligence server, received from the artificial intelligence server, and stored in the memory 170 of the cooking device 100.

As another example, the processor 180 may transmit the captured image to the artificial intelligence server through the communication unit 110. The artificial intelligence server may generate a plurality of expected images from the image using an image generation unit, and transmit the generated plurality of expected images to the cooking device 100 or the user's mobile terminal.

The mobile terminal may be a terminal such as a user's smart phone, smart pad, or PC.

After identifying food from the input food image, the image generation unit may generate a plurality of expected images corresponding to the identified food.

As another embodiment, a separate object identification model for identifying the image generation unit and the type of food may be provided.

The object identification model may identify the type of food from the food image through a Faster R-CNN (Regions with Convolution Neural Networks) method.

The Faster R-CNN (Regions with Convolution Neural Networks) method will be described in detail.

First, a feature map is extracted from an image through a Convolution Neural Network (CNN) model. Based on the extracted feature map, a plurality of regions of interest (RoI) are extracted. Then, RoI pooling is performed for each region of interest.

RoI pooling sets the grid so that the feature map on which the region of interest is projected fits in a predetermined H x W size, extracts the largest value for each cell included in each grid, and produces a feature map with H x W size. It is a process of extraction.

A feature vector is extracted from the feature map having a size of H x W, and identification information representing the type of food may be obtained from the feature vector.

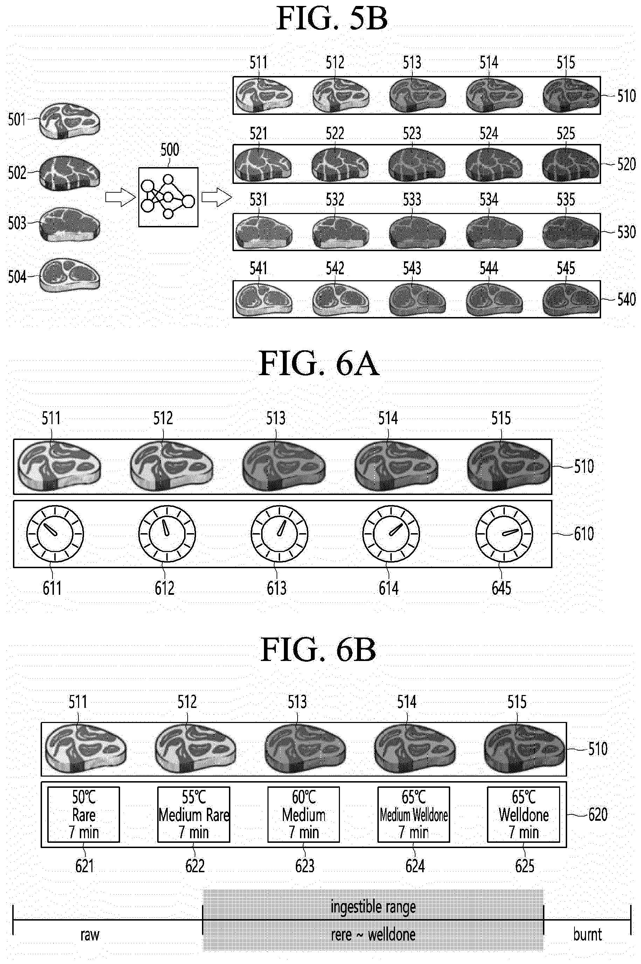

FIG. 5A is a diagram illustrating the configuration of an image generation unit according to an embodiment of the present disclosure, and FIG. 5B is a process of generating a plurality of expected images corresponding to a plurality of cooking steps from a food image according to an embodiment of the present disclosure.

The image generating unit 500 may be a component included in any one of the learning processor 130, the memory 170, or the processor 180, or may be a separate component.

The image generating unit 500 may also be referred to as an image generating model.

Referring to FIG. 5A, the image generation unit 500 may include an image manipulation unit 510, a quantifier learning unit 520, and a navigator learning unit 530.

The image manipulation unit 510 may include a quantifier 511 and a navigator 512.

The quantifier 511 may be referred to as an attribute quantifier, and may determine (or estimate) the degree of an attribute (or amount of an attribute) to be edited.

Here, the properties may include various properties that can be transformed or manipulated in the image, and for example, in the case of food, it may include the degree of cooking, size, shape, and the like.

For each attribute of the image, the degree (strength) of the attribute may be defined as a standardized value.

Specifically, if an attribute to be adjusted and a target value are input for an arbitrary input image (or a received image), the image generation unit 500 may generate an image in which the corresponding attribute is changed by the target value.

The image generating unit 500 may automatically generate an expected image in which an attribute is changed by a target value without a process in which a user determines the degree of an attribute by looking at an input image or a generated image.

To this end, the image generating unit 500 of the present invention the quantifier 511 for measuring the degree of attributes of an image and a navigator 512 (or navigator) that performs manipulation by exploring latent space the potential of an image generating AI model (Image Generative model) based on the quantifier 511.

The image generating AI model (Generative Adversarial Network) may include a Generative Adversarial Networks (GAN), a Vector AutoEncoder (VAE) model, a diffusion model, and the like.

The image generating unit 500 of the present invention is characterized by performing a search within a latent space of an image generating AI model. However, in the following, for convenience, the operation method will be described mainly based on the GAN (Generative Adversarial Network) model.

The navigator 512 may perform a search within the latent space of the generative adversarial networks (GAN) model to transform the attribute of the image by the degree determined by the quantifier 511.

The quantifier 110 may provide standardized value for attribute of the image to be manipulated.

Specifically, the standardized value may be set to a value between 0 and 1.

To this end, the image generating unit 500 of the present invention may further include a quantifier learning unit 520 that trains the quantifier 511 so that the quantifier 511 quantifies the conversion degree of the attribute.

The quantifier learning unit 520 may train the quantifier 511 to define standardized value for attribute manipulation with a small number of images.

The quantizer learning unit 520 may train the quantifier 511 using a custom attribute dataset in order to perform learning on a specific attribute (for example, degree of cooked food).

The quantifier learning unit 520 may define (or learn) a standardized numerical value for a specific attribute (for example, level of learning) corresponding to the custom attribute dataset by using the custom attribute dataset.

Thereafter, the image generation unit 510 may receive a target input value for the corresponding attribute as a standardized numerical value, it is possible to create an image with manipulated property as much as a desired degree (amount, size, or numerical value) by receiving an input random image (or received image) as an input.

For example, the user selects the attributes (degree of cooking, shape, etc.) of the food to be manipulated, and then, depending on the degree of the attribute (or strength of the attribute), a plurality of steps (for example, 4 to 1) between 0 and 1 10 steps), and learning can be performed using one or more custom attribute datasets (for example, 1 to 5 reference images) for each step.

For example, if learning the quantifier for the attribute of the degree of cooking, the quantifier learning unit 520 divides the range from 0 to 1 into about 10 steps, and designates a custom attribute dataset in order of the degree of cooking to quantify the operation range and steps for attribute of the degree of cooking of the food.

At this time, the step may be set to a standardized value between 0 and 1.

The quantifier 511 can be learned to output normalized value from image.

The navigator 512 may perform a search within the latent space of a generative adversarial network (GAN) model to transform the attribute of the image by the degree determined by the quantifier 511 (the amount of attributes to transform).

For example, the GAN model included in the image generation unit 500 of the present invention may be formed to generate (or manipulate) a food image.

The navigator 512 may perform image manipulation by moving the quantity vector by the degree to which the attribute determined by the quantifier 511 is transformed within the latent space of the GAN model.

At this time, the navigator 512 may be trained so that the quantity vector does not deviate from the latent space.

The image generation unit 500 moves the quantity vector in the latent space, and may further include a navigator learning unit 530 that performs the learning of the navigator 512 through the value change of the quantifier 511 for the manipulated image if the image is manipulated by the movement of the quantity vector.

The navigator learning unit 530 may learn the navigator 512 so that the target quantity vector input through the quantifier 511 and the estimated quantity vector obtained by inversely estimating the numerical change of the quantifier 511 through image manipulation through the latent space are matched with each other.

The phenomenon appears in the order of movement in the latent space, change occurrence in the received image, and change occurrence in the value of the quantifier 511 for the changed image.

The navigator learning unit 530 may learn the navigator 512 using this correlation.

After learning, if the target value for the image to be created (manipulated) is reversely inputted through the quantifier 511, the navigator 512 moves the quantity vector in the latent space that causes the manipulation.

By applying the movement of the quantity vector to the image, the image generating unit 500 of the present invention may generate a manipulated image having a desired target value.

The image manipulation unit 510 may include a plurality of quantifiers 110a and 110b to correspond to a plurality of attributes so as to manipulate a plurality of attributes.

Each of the plurality of quantifiers may be configured to manipulate a different attribute, and each quantifier may be configured to provide a standardized value for that attribute.

If conversion requests for different attributes are received through a plurality of quantifiers, the navigator 512 of the present invention may manipulate an image so that the received plurality of attributes are reflected together.

For example, a conversion request for a first attribute (for example, degree of learning) may be received through the first quantifier 110a, and a conversion request for a second attribute (for example, shape or color) may be received through the second quantifier 110b.

In this case, the navigator 512 may convert attribute of the received image the conversion to correspond the conversion degree of the received first attribute through the standardized value provided by the first quantifier 110a and the conversion degree of the received second attribute through the standardized value provided by the second quantifier 110b.

Thereafter, the navigator 512 may generate and output a manipulated image in which the first attribute and the second attribute are both reflected.

Referring to FIG. 5B, an image generation unit 500 based on an artificial neural network is shown.

It is assumed that the types of food represented by the first to fourth food images 501 to 504 are the same. The type of food may be meat.

If the first food image 501 is input, the image generation unit 500 may generate a first expected image set 510 representing a plurality of cooking stages of the food of the first food image 501.

The first set of expected images 510 may include a plurality of expected images 511 to 515 indicating the degree of cooking progress of the food corresponding to the first food image 501.

Each of the plurality of expected images 511 to 515 may be an image indicating how much cooking has progressed according to the lapse of cooking time.

Each expected image may be an image distinguishable from other expected images according to cooking characteristics such as degree of cooking, cooking temperature, cooking time, and shape.

If the second food image 502 is input, the image generation unit 500 may generate a second expected image set 520 representing a plurality of cooking stages of the food of the second food image 502.

The second expected image set 520 may include a plurality of expected images 521 to 525 representing the degree of cooking progress of food corresponding to the second food image 502.

Each of the plurality of expected images 521 to 525 may be an image indicating how much cooking has progressed according to the lapse of cooking time.

If the third food image 503 is input, the image generation unit 500 may generate a third expected image set 530 representing a plurality of cooking stages of the food of the third food image 503.

The third expected image set 530 may include a plurality of expected images 531 to 535 representing the degree of cooking progress of the food corresponding to the third food image 503.

Each of the plurality of expected images 531 to 535 may be an image indicating how much cooking has progressed according to the lapse of cooking time.

If the fourth food image 504 is input, the image generation unit 500 may generate a fourth expected image set 540 representing a plurality of cooking stages of the food of the fourth food image 504.

The fourth expected image set 540 may include a plurality of expected images 541 to 545 representing the degree of cooking progress of the food corresponding to the fourth food image 504.

Each of the plurality of expected images 541 to 545 may be an image indicating how much cooking has progressed according to the lapse of cooking time.

The number of expected images included in each expected image set is 5 as an example, but this is only an example.

The image generation unit 500 may generate different types of expected images according to the image of the food, even if it is the same type of food.

The cooking progress step may be distinguished by one or more of the cooking time period, the degree of cooking of the food, and the degree of change in the shape of the food.

In one embodiment, a plurality of cooking steps corresponding to each of a plurality of expected images may be classified according to a predetermined time period.

In another embodiment, a plurality of cooking steps corresponding to each of the plurality of expected images may be classified according to the degree of change of the food. The degree of change of food may be one or more of a degree of cooking or a degree of change in shape.

For example, a first expected image and a second expected image that is a next cooking step of the first expected image may have different degree of cooking.

Again, Fig. 4 will be described.

The processor 180 may display a plurality of expected images on the display unit 151 (S405).

The processor 180 may display one or more of a plurality of expected images on the display unit 151.

The processor 180 may display cooking information matching the expected image adjacent to each of the plurality of expected image.

The cooking information may include information about an expected image. The cooking information may be information about a cooking state.

The cooking information may include one or more of a degree of cooking, an expected cooking temperature, and an expected cooking time.

FIGS. 6A to 6F are diagrams illustrating examples of displaying a plurality of expected images and cooking information according to an embodiment of the present disclosure.

Referring to FIG. 6A, a first expected image set 510 generated by an image generation model 500 is shown.

The display unit 151 provided in the cooking device 100 may display a first expected image set 510 including a plurality of expected images 511 to 515 generated through the image generation model 500.

The user may select an expected image reflecting a desired cooking state through the first expected image set 510. Accordingly, food may be cooked in a state in which the user's needs are more accurately reflected.

The processor 180 may further display a guide image set 610 including a plurality of manipulation images 611 to 615 in addition to the first expected image set 510.

Each of the plurality of manipulation images 611 to 615 may correspond to each of the plurality of expected images 511 to 515. Each of the plurality of manipulation images 611 to 615 may be an image guiding a manipulation button to be manipulated to cook food in a cooking state corresponding to each expected image.

Each manipulation image may guide one or more of cooking time or cooking temperature.

The user may be assisted in selecting an expected image reflecting a desired cooking state through the guide image set 610.

In another embodiment, each of the plurality of expected images 511 to 515 may be displayed in association with a physical manipulation button. That is, the display unit 151 displays an expected image and the processor 180 may automatically control the manipulation button so that the food is cooked according to the cooking information matching the displayed expected image.

Referring to FIG. 6B, the processor 180 may further display the cooking information set 620 on the display unit 151 together with the first expected image set 510.

The cooking information set 620 may include a plurality of cooking information items 621 to 625.

Each cooking information item may include information about the cooking state of each expected image.

Each cooking information item may include one or more of an expected cooking temperature, an expected cooking degree, and an expected cooking time.

The user may be assisted in selecting an expected image reflecting a desired cooking state through the cooking information set 620.

According to another embodiment of the present disclosure, the processor 180 may display the first expected image set 510, the guide image set 610, and the cooking information set 620 on the display unit 151.

On the other hand, the expected images 511 to 515 displayed on the display unit 151 may be cases in which the degree of cooking is within an ingestible range. That is, only the expected images 511 to 515 within the ingestible range may be displayed on the display 151.

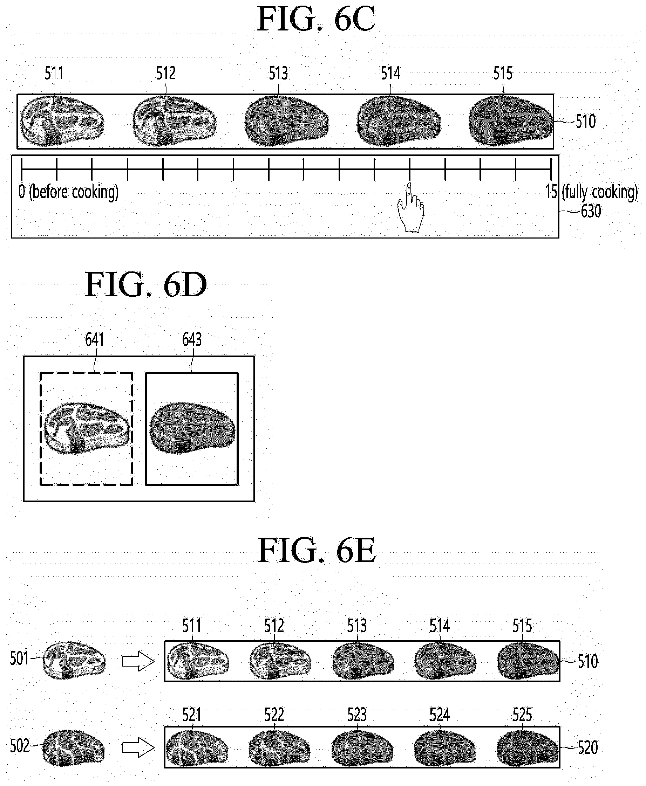

Referring to FIG. 6C, the processor 180 may further display a cooking degree bar 630 on the display unit 151 together with the first expected image set 510.

The cooking degree bar 630 may be a numerical value indicating the degree of cooking of food corresponding to each of a plurality of cooking steps.

The cooking degree bar 630 may be divided into a plurality of levels, and the plurality of levels may indicate a degree of cooking.

The user may select a desired degree of cooking through the cooking level bar 630.

As such, according to an embodiment of the present disclosure, the user may more specifically select a desired degree of cooking through the cooking degree bar 630.

Referring to FIG. 6D, the processor 180 may display recommended expected images 641 and 643 corresponding to the recommended cooking steps on the display unit 151.

In an embodiment, the processor 180 may obtain a recommended cooking step for a specific food based on a previously stored user's past cooking history.

If the food is steak, the first recommendation expected image 641 may correspond to a medium stage of six cooking stage among a total of 10 cooking stages, and the second recommendation expected image 643 may correspond to a well-done stage of 8 cooking stage.

The processor 180 may display the recommended expected images 641 and 643 together with the first expected image set 510. Each of the recommended expected images 641 and 643 may be any one of the expected images included in the first expected image set 510.

Through the recommendation expected images 641 and 643, a guide for cooking prediction of food may be provided to the user in more detail.

As another embodiment, recommendation expected images may be displayed separately within the expected image set 510 without separate display of the recommended expected images.

FIG. 6E assumes that two foods are stored in the cooking chamber 12 and cooked.

The processor 180 may generate a first expected image set 510 based on the first food image 501 according to being captured the first food, and generate a second expected image set 520 based on the second food image 501 according to being captured the second food.

The first food and the second food may be of the same type or of different types.

The processor 180 may simultaneously display the first expected image set 510 and the second expected image set 520 on the display 151.

That is, even if a plurality of foods are cooked, the processor 180 may identify each food and display expected images corresponding to the identified food.

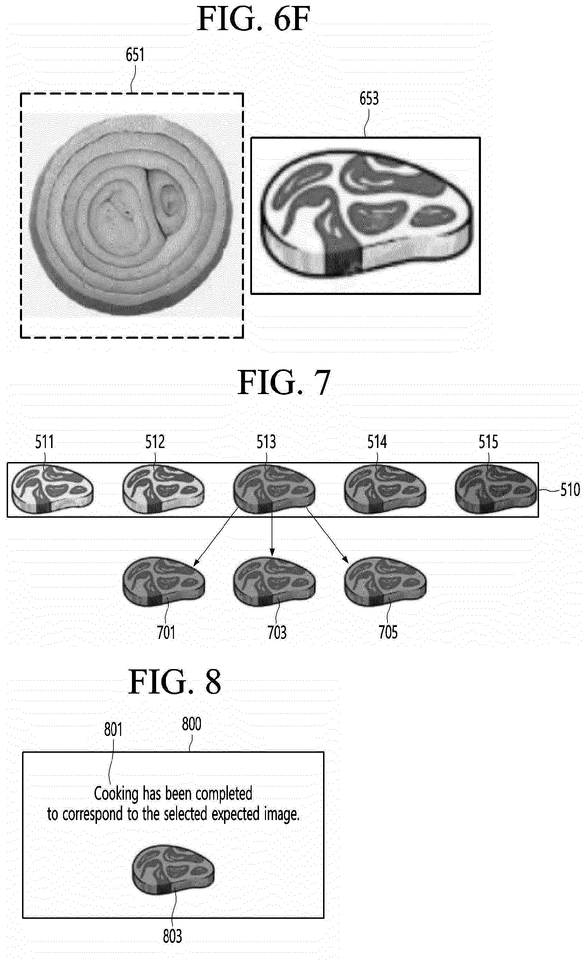

FIG. 6F is a diagram illustrating that recommendation expected images are provided if two different types of food are stored in the cooking chamber 12.

The third recommendation expected image 651 may be a five-stage image of an onion generated through the image generation model 500.

The fourth recommendation expected image 653 may be an image of a six stage (medium) of steak generated through the image generation model 500.

The third and fourth recommended expected images 653 and 655 may be displayed together with an onion image set and a steak image set.

As described above, according to an embodiment of the present disclosure, even if a plurality of foods are cooked, a set of expected images and a recommended expected image for each food may be provided so that the user's cooking options for the food may be expanded.

As another embodiment, the recommended expected image may be displayed separately from each of a plurality of expected image sets without separate display of the recommended expected image.

Meanwhile, if any one of the images included in the first expected image set 510 is selected, a cooking step corresponding to the selected image may be subdivided and displayed.

FIG. 7 is a diagram for explaining an example of providing sub-expected images that are more segmented according to selection of the expected image according to an embodiment of the present disclosure.

If the third expected image 513 included in the first expected image set 510 is selected, the processor 180 may display a plurality of sub expected images 701, 703, and 705 in which the cooking step of the selected image is further subdivided on the display unit 151.

In another embodiment, the processor 180 may display only cooking steps (for example, steps 5 to 8) within a certain range among 10 steps on the display unit 151 according to a user command.

The user command may be either a touch input or a voice command.

Again, Fig. 4 will be described.

The processor 180 receives a command to select one of a plurality of expected images (S407), and cooks food using cooking information corresponding to the selected expected image according to the received command (S409).

The processor 180 may store cooking information corresponding to each expected image in the memory 170 by matching the corresponding expected image.

The processor 180 may extract cooking information corresponding to the selected expected image from the memory 170 according to a command for selecting the expected image.

The processor 180 may cook the food in the cooking chamber 12 according to the extracted cooking information. After selecting the expected image, the processor 180 may automatically cook food to be similar to the result of the selected expected image while changing at least one of the cooking time and cooking temperature.

In one embodiment, the processor 180 may initially cook the food at a low temperature, then cook the food at a high temperature over time. At the same time, the processor 180 may reduce the cooking time of food.

In another embodiment, the processor 180 may initially cook the food at a high temperature, then cook the food at a low temperature over time. At the same time, the processor 180 may increase the cooking time of the food.

The processor 180 may compare the selected expected image with the image of the food being cooked (S411).

The processor 180 may capture the food being cooked after starting cooking of the food.

The processor 180 may measure a similarity between the image of food being cooked and the selected expected image.

The processor 180 may measure similarity between two images through a pixel-wise operation in image space. A pixel-wise operation may be an operation in which the same operation is applied to each of a plurality of pixels constituting an image.

The processor 180 may obtain a mean squared error (MSE), which is a square difference between pixel values of the two images, as a similarity between the two images.

The processor 180 may obtain the measured MSE as a similarity between the two images using the following [Equation 1].

[Equation 1]

$$MSE = \frac{1}{n} \sum_{i=1}^{n} \left( Y_i - \hat{Y_i} \right)^2$$

where n is the total number of pixels, i $Y_i$ s the i-th pixel value of the expected image, $\hat{Y_i}$ may be the i-th pixel value of the image being cooked.

In another embodiment, the processor 180 may obtain a Frechet inception distance (FID) as a similarity between two images. The FID may be an index indicating how similar the distribution of the expected image and the distribution of the image being cooked are.

The processor 180 may obtain the calculated FID as a similarity between the two images using the following [Equation 2].

[Equation 2]

$$FID = d^2 = \|\mu_1 - \mu_2\|_2^2 - Tr(\Sigma_1 + \Sigma_2 - 2\Sigma_1\Sigma_2)$$

Since the method of measuring FID is a well-known technique, a detailed description thereof will be omitted.

In another embodiment, the processor 180 may acquire Learned Perceptual Image Patch Similarity (LPIPS) as a similarity between two images.

The processor 180 may obtain the measured LPIPS as a similarity between the two images using the following [Equation 3].

[Equation 3]

$$LPIPS = \sum_{l} \frac{1}{H_l W_l} \sum_{h,w} \|w^l \odot (\hat{y}_{hw}^l - \hat{y}_{0hw}^l)\|_2^2$$

Since the method of measuring LPIPS is a well-known technique, a detailed description thereof will be omitted.

In another embodiment, the processor 180 may use the image generation model 500 to compare a first attribute score obtained by quantifying a specific attribute of the expected image with a second attribute score obtained by quantifying a specific attribute of the cooking image being cooked.

The processor 180 may obtain a difference between the first attribute score and the second attribute score as a similarity between the two images.

The processor 180 may cook the food until the second attribute score becomes equal to the first attribute score.

As a result of the comparison, the processor 180 may output a cooking completion notification (S415) if it is determined that the expected image and the image of the food being cooked are similar (S413).

The processor 180 may determine that the two images are similar if the MSE is less than a preset value.

The processor 180 may determine that the two images are similar if the FID is less than a preset value.

The processor 180 may determine that the two images are similar if LPIPS is less than a preset value.

The processor 180 may determine that the two images are similar if the difference between the second attribute score and the first attribute score is less than a preset value or if the second attribute score and the first attribute score are equal to each other.

If it is determined that the two images are similar, the processor 180 may output a cooking completion notification.

FIG. 8 is a diagram illustrating a cooking completion notification according to an embodiment of the present disclosure.

Referring to FIG. 8, the processor 180 may display a cooking completion notification 800 on the display unit 151 if it is determined that the expected image and the image being cooked are similar.

The cooking completion notification 800 may include a text 801 indicating completion of cooking and a cooking completion image 803 in a state in which cooking is completed.

The cooking completion notification 800 may include cooking information together with the cooking completion image 803.

The processor 180 may transmit a cooking completion notification 800 to the user's mobile terminal.

Meanwhile, the processor 180 may shorten the comparison period as the similarity between the two images approaches a preset value. That is, the processor 180 may initially lengthen the comparison period between the two images, and then shorten the comparison period as it approaches the preset value.

Again, Fig. 4 will be described.

As a result of the comparison, the processor 180 maintains cooking of the food if it is determined that the expected image and the image of the food being cooked are not similar (S413).

The processor 180 may output information about a current cooking stage while cooking food.

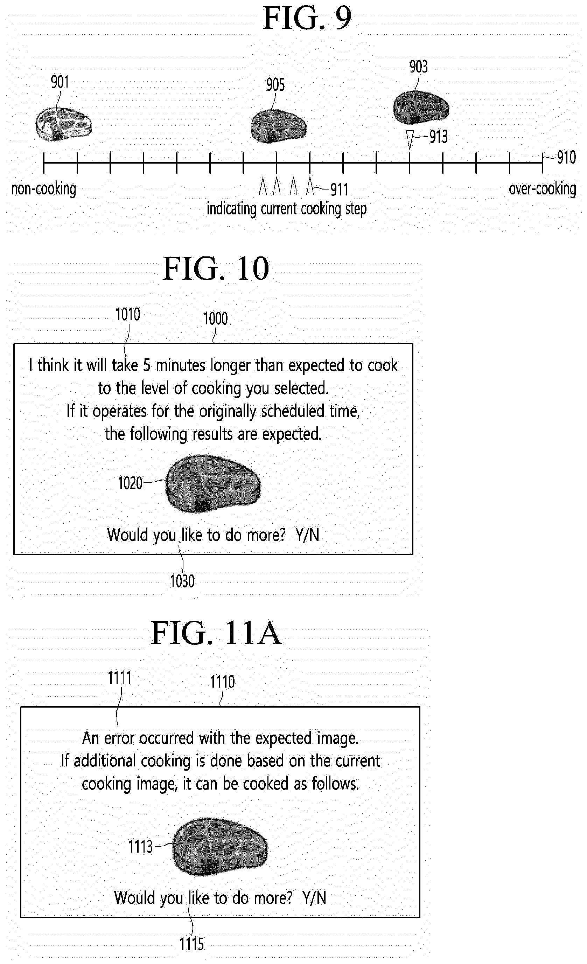

FIG. 9 is a diagram for explaining an example of displaying a cooking state for a current cooking step according to an embodiment of the present disclosure.

Referring to FIG. 9, the processor 180 may display an expected image 903 selected from the expected image set, a cooking image 905 in a current cooking step, and a cooking status bar 910 on the display unit 151.

A captured image 901 of the first food may also be displayed.

The cooking state bar 910 may be a bar that guides the progress of cooking. A first indicator 911 indicating a current cooking step and a second indicator 913 indicating a target cooking step may be displayed on the cooking state bar 910.

Even for the same food, the cooking time may vary depending on the amount of food.

In the present disclosure, the current cooking step and the target cooking step may be intuitively displayed through the cooking state bar 910 and the first and second indicators 911 and 913 regardless of whether the cooking state changes rapidly or the amount of food is large or small.

Meanwhile, if the expected cooking time corresponding to the expected image is changed, the processor 180 may provide the changed expected cooking time and the changed expected image.

FIG. 10 is a diagram for explaining information provided if an expected cooking time corresponding to an expected image is changed according to an embodiment of the present disclosure.

The processor 180 may compare the expected image with the image being cooked and detect that the expected cooking time is changed based on the comparison result.

When detecting that the expected cooking time is changed, the processor 180 may display an expected cooking time change notification 1000 as shown in FIG. 10.

The cooking state change notification 1000 may include information 1010 on the changed expected cooking time, a modified cooking image 1020 if cooking is performed according to the initial expected cooking time, and an option 1030 on whether to additionally cook.

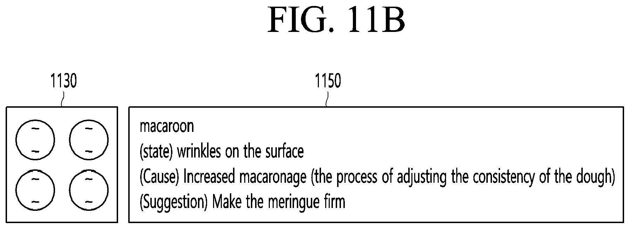

FIGS. 11A and 11B are diagrams illustrating output information if a cooking failure situation occurs according to an embodiment of the present disclosure.

After cooking for an expected cooking time corresponding to the expected image, the processor 180 may compare the expected image with an image of food in a fully cooked state.

After cooking for the expected cooking time, the processor 180 may determine that cooking has failed if it is determined that the expected image and the cooked image are not similar.

That is, the processor 180 may determine that an error between the expected image and the cooked image is greater than or equal to a threshold value.

If a cooking failure situation is detected, the processor 180 may display an error occurrence notification 1110 on the display unit 151 as shown in FIG. 11A.

The error occurrence notification 1110 may include a text 1111 indicating that an error has occurred between the expected image and the current cooking image (cooked image), a new expected image 1113, and an option 1115 inquiring whether to additionally cook.

The processor 180 may measure a similarity between the expected image and the current cooked image, and determine whether the measured similarity is less than a preset value.

If the measured similarity is determined to be less than a preset value, the processor 180 may obtain an additional cooking time until the measured similarity reaches the preset value.

The processor 180 may generate a new expected image 1113 based on the obtained additional cooking time and display the generated new expected image 1113.

If a cooking failure situation is detected, the processor 180 may display one or more of the current cooking image 1130 and cooking failure information 1150 on the display unit 151.

The cooking failure information 1150 may include one or more of a current cooking state of food, a cause of cooking failure, and a suggested cooking method.

The processor 180 may generate cooking failure information 1150 based on the current cooking image 1130. The processor 180 may transmit the current cooking image 1130 to an artificial intelligence server (not shown), and may receive cooking failure information 1150 indicating an analysis result of the current cooking image 1130 from the artificial intelligence server.

The artificial intelligence server may store pre-learned cooking failure scenario. The cooking failure scenario may include a cooking image and cooking failure information matched to the cooking image.

The user may be guided on a correct cooking method through the cause of cooking failure and the suggested cooking method included in the cooking failure information 1150.

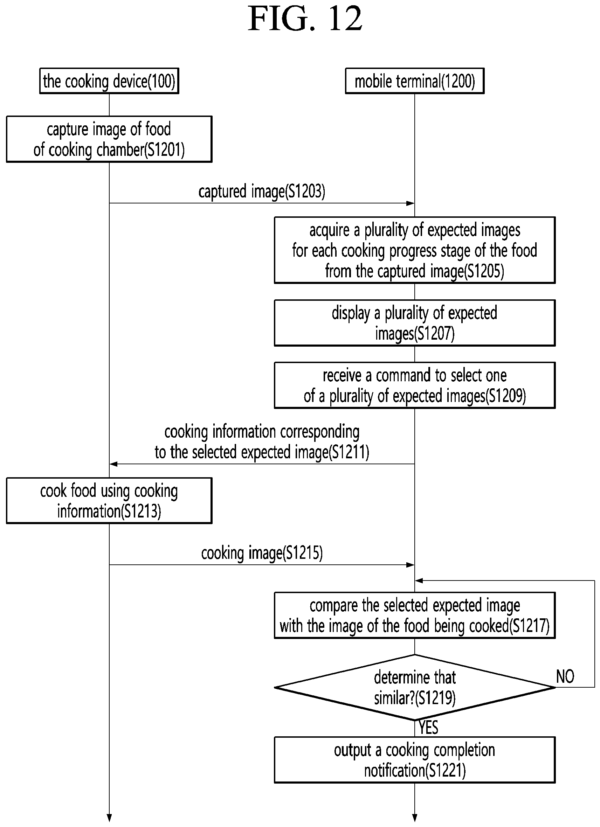

FIG. 12 is a ladder diagram for explaining an operating method of a cooking system according to an embodiment of the present disclosure.

The cooking system may include the cooking device 100 and the mobile terminal 1200.

The mobile terminal 1200 may be any one of a user's smartphone, smart pad, and PC.

The mobile terminal 1200 may include a display, a processor, and a wireless communication interface for wireless communication with the cooking device 100. The wireless communication interface may be either a Bluetooth circuit or a Wi-Fi circuit.

The processor 180 of the cooking device 100 may capture an image of food through the camera 121 (S1201).

The processor 180 of the cooking device 100 may transmit the captured image to the mobile terminal 1200 through the communication unit 110 (S1203).

The processor of the mobile terminal 1200 may generate a plurality of expected images for each cooking stage of food from the acquired image using an image generation unit (S1205).

The image generation unit may be the image generation unit 500 described in FIGS. 5A and 5B.

The image generation unit 500 may be included in the processor of the mobile terminal 1200.

The processor of the mobile terminal 1200 may display a plurality of expected images on the display (S1207).

What is displayed in the embodiments of FIGS. 6A to 6F can be displayed on the display of the mobile terminal 1200.

The processor 180 receives a command to select any one of a plurality of expected images (S1209), and transmits cooking information corresponding to the selected expected image to the cooking device 100 through a wireless communication interface according to the received command. It can (S1211).

The processor 180 of the cooking device 100 cooks food based on the received cooking information (S1213).

The processor 180 of the cooking device 100 may capture the food while it is being cooked and transmit the captured cooking image to the mobile terminal 1200 (S1215).

The processor of the mobile terminal 1200 may compare the selected anticipated image with the image of the food being cooked (S1217).

An embodiment corresponding to step S411 of FIG. 4 may be applied to the image comparison process.

If the processor of the mobile terminal 1200 determines that the expected image and the image of the food being cooked are similar as a result of the comparison (S1219), it may output a cooking completion notification (S1221).

The mobile terminal 1200 may display the cooking completion notification 800 of FIG. 8 on the display.

As a result of the comparison, the processor 180 maintains cooking of the food if it is determined that the expected image and the image of the food being cooked are not similar (S413).

According to an embodiment of the present disclosure, the above-described method can be implemented as computer readable code on a medium on which a program is recorded. A computer-readable medium includes all types of recording devices in which data that can be read by a computer system is stored. Examples of computer-readable media include Hard Disk Drive (HDD), Solid State Disk (SSD), Silicon Disk Drive (SDD), ROM, RAM, CD-ROM, magnetic tape, floppy disk, optical data storage device, etc.

**Claims**

1. A cooking device (100), comprising:

    a display unit (151);

a cooking chamber (12);
a heating unit (190) configured to heat the cooking chamber (12);
a camera (121) configured to capture a cooking image of a food located inside the cooking chamber; and
a processor (180) configured to:

generate a plurality of expected images representing a cooking progress stage of the food from the cooking image of the food captured by the camera (121) using an image generation model that generates a changed image by manipulating a numerical value of an attribute of the cooking image,
display the plurality of expected images on the display unit (151) and
control the heating unit (190) to cook the food using cooking information matched to an selected expected image according to a user's command for selecting one of the plurality of expected images.

2. The cooking device (100) of claim 1,

wherein the processor (180) is configured to

generate a first expected image set including a plurality of expected images, if a first food cooking image corresponding to a first food is input to the image generation model, and
generate a second expected image set including a plurality of expected images, if a second food cooking image corresponding to a second food is input to the image generation model,

wherein a type of the first food and a type of the second food are different or the same.

3. The cooking device (100) of any one of claims 1 or 2,

wherein the cooking information includes one or more of: a cooking temperature, a cooking time, and a degree of cooking,
wherein the cooking process stage is classified by one or more of: a cooking time period, a degree of cooking of the food, or a degree of change in a shape of the food.

4. The cooking device (100) of any one of claims 1 to 3,
wherein the processor (180) is further configured to display, on the display unit (151), a plurality of manipulation images for guiding a manipulation button to be manipulated so that food is cooked in a cooking state corresponding to each of the plurality of expected images.

5. The cooking device (100) of any one of claims 1 to 4,
wherein the processor (180) is further configured to display, on the display unit (151), cooking information corresponding to each of the plurality of expected images.

6. The cooking device (100) of claim 1,
wherein the processor (180) is further configured to display a cooking degree bar quantifying the degree of cooking corresponding to each of the plurality of cooking steps on the display unit (151).

7. The cooking device (100) of claim 1,
wherein the processor (180) is further configured to display, a recommended expected image corresponding to a recommended cooking step based on the user's past cooking history.

8. The cooking device (100) of claim 1,
wherein the processor (180) is configured to:

re-capture the cooking image of the food during cooking,
compare the re-captured cooking image with the selected expected image, and
as a result of the comparison, if it is determined that the re-captured cooking image and the selected expected image are similar to each other, output a cooking completion notification.

9. The cooking device (100) of claim 8,
wherein if a difference between a first attribute score quantifying a specific attribute of the expected image and a second attribute score quantifying the specific attribute of the re-captured cooking image is less than a preset value, the processor determines that the re-captured cooking image and the expected image are similar to each other.

10. The cooking device (100) of claim 1,
wherein the processor (180) is configured to:

re-capture the cooking image of the food during cooking,
compare the re-captured cooking image with the selected expected image, and
if the expected cooking time corresponding to the selected expected image is changed, display the changed expected cooking time and the changed expected image.

11. The cooking device (100) of claim 1,
wherein after cooking has been performed for an expected cooking time corresponding to the selected expected image, the processor is configured to:

compare the expected image with a cooking image of food in a cook completion state, and
if it is determined that the expected image and the cooking image are not similar, determine that cooking has failed.

12. The cooking device (100) of claim 11,
wherein the processor (180) is configured to display a notification indicating that an error between the expected image and the cooking image is greater than or equal to a threshold value.

13. The cooking device of claim 11,
wherein the processor (180) is configured to acquire additional cooking time and to display a new expected image based on the acquired additional cooking time.

14. The cooking device (100) of claim 11,
wherein the processor (180) is configured to display a cooking failure information including a cause of cooking failure of the food and a suggested cooking method.

15. An operating method of a cooking device (100) of any one of claims 1 to 14, comprising:

capturing a cooking image of a food located inside the cooking chamber (12);
generating a plurality of expected images indicating a cooking progress stage of the food from the captured cooking image of the food by using an image generation model that generates a changed image by manipulating numerical values of attributes of the cooking image;
displaying the plurality of generated expected images; and
cooking the food using cooking information matching the expected image selected according to a command form a user for selecting one of the plurality of expected images.

# FIG. 1

# FIG. 2

# FIG. 3

# FIG. 4

```
┌─────────────────────────────────────────────────┐
│    capture image of food of cooking chamber      │──S401
└─────────────────────────────────────────────────┘
                        │
                        ▼
┌─────────────────────────────────────────────────┐
│  acquire a plurality of expected images for each │
│  cooking progress stage of the food from the     │──S403
│  captured image                                  │
└─────────────────────────────────────────────────┘
                        │
                        ▼
┌─────────────────────────────────────────────────┐
│         display a plurality of expected images   │──S405
└─────────────────────────────────────────────────┘
                        │
                        ▼
┌─────────────────────────────────────────────────┐
│            receive a command to select one       │
│            of a plurality of expected images     │──S407
└─────────────────────────────────────────────────┘
                        │
                        ▼
┌─────────────────────────────────────────────────┐
│           cook food using cooking information    │
│    corresponding to the selected expected image  │──S409
└─────────────────────────────────────────────────┘
                        │
                        ▼
┌─────────────────────────────────────────────────┐
│            compare the selected expected image   │
│       with the image of the food being cooked    │──S411
└─────────────────────────────────────────────────┘
                        │
                        ▼
         ◇─────────────────────────────────◇
    NO   │   determine that similar?(S413)   │
    ─────│                                   │
         ◇─────────────────────────────────◇
                        │ YES
                        ▼
┌─────────────────────────────────────────────────┐
│        output a cooking completion notification  │──S415
└─────────────────────────────────────────────────┘
```

# FIG. 5A

500

```
      520                    510                      530
       │                      │                        │
┌──────────────┐   ┌─────────────────────┐   ┌──────────────┐
│              │   │       image         │   │              │
│              │   │  manipulation unit   │   │              │
│              │   │ ┌─────────────────┐ │   │              │
│  quantifier  │511│ │  quantifier A   │─┼─511a│  navigator  │
│  learning    │───┤ └─────────────────┘ │   │  learning    │
│  unit        │   │ ┌─────────────────┐ │   │  unit        │
│              │   │ │  quantifier B   │─┼─511b│             │
│              │   │ └─────────────────┘ │   │              │
│              │   │ ┌─────────────────┐ │   │              │
│              │   │ │    navigator    │─┼─512│              │
│              │   │ └─────────────────┘ │   │              │
└──────────────┘   └─────────────────────┘   └──────────────┘
```

# FIG. 5B

# FIG. 6A

# FIG. 6B

| 50°C Rare 7 min | 55°C Medium Rare 7 min | 60°C Medium 7 min | 65°C Medium Welldone 7 min | 65°C Welldone 7 min |

ingestible range

raw | rere ~ welldone | burnt

# FIG. 6C

# FIG. 6D

# FIG. 6E

# FIG. 6F

# FIG. 7

# FIG. 8

Cooking has been completed
to correspond to the selected expected image.

# FIG. 9

non-cooking

indicating current cooking step

over-cooking

# FIG. 10

I think it will take 5 minutes longer than expected to cook
to the level of cooking you selected.
If it operates for the originally scheduled time,
the following results are expected.

Would you like to do more?  Y/N

# FIG. 11A

An error occurred with the expected image.
If additional cooking is done based on the current
cooking image, it can be cooked as follows.

Would you like to do more?  Y/N

# FIG. 11B

1130                                   1150

macaroon
(state) wrinkles on the surface
(Cause) Increased macaronage (the process of adjusting the consistency of the dough)
(Suggestion) Make the meringue firm

# FIG. 12

| the cooking device(100) | mobile terminal(1200) |
|---|---|

capture image of food
of cooking chamber(S1201)

captured image(S1203)

acquire a plurality of expected images
for each cooking progress stage of the food
from the captured image(S1205)

display a plurality of expected
images(S1207)

receive a command to select one
of a plurality of expected images(S1209)

cooking information corresponding
to the selected expected image(S1211)

cook food using cooking
information(S1213)

cooking image(S1215)

compare the selected expected image
with the image of the food being cooked(S1217)

determine that
similar?(S1219)          NO

YES

output a cooking completion
notification(S1221)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | WO 2022/148593 A1 (BSH HAUSGERAETE GMBH [DE]) 14 July 2022 (2022-07-14)<br>* page 8, line 15 - page 8, line 19 *<br>* figure 1 *<br>* page 16, line 21 - page 16, line 25 *<br>* figure 2 *<br>* page 17, line 1 - page 17, line 2 *<br>* page 17, line 25 - page 17, line 32 *<br>* page 18, line 1 - page 18, line 4 *<br>* page 18, line 23 - page 18, line 30 *<br>* claim 14 *<br>- - - - - | 1-6,<br>8-10,15<br>7,11-14 | INV.<br>F24C7/08<br>G06T7/90 |
| Y | US 2022/381439 A1 (BHOGAL NIKHIL [US] ET AL) 1 December 2022 (2022-12-01)<br>* paragraphs [0087], [0137], [0138] *<br>- - - - - | 7 | |
| Y | WO 2020/074478 A1 (BSH HAUSGERAETE GMBH [DE]) 16 April 2020 (2020-04-16)<br>* paragraphs [0070] - [0073]; claim 13 *<br>- - - - - | 11-14 | |

TECHNICAL FIELDS
SEARCHED      (IPC)

F24C
G06T

The present search report has been drawn up for all claims

| Place of search | Date of completion of the search | Examiner |
|---|---|---|
| The Hague | 16 July 2024 | Jalal, Rashwan |

CATEGORY OF CITED DOCUMENTS

X : particularly relevant if taken alone
Y : particularly relevant if combined with another
　　document of the same category
A : technological background
O : non-written disclosure
P : intermediate document

T : theory or principle underlying the invention
E : earlier patent document, but published on, or
　　after the filing date
D : document cited in the application
L : document cited for other reasons

                                              
& : member of the same patent family, corresponding
　　document

EPO FORM 1503 03.82 (P04C01)

## ANNEX TO THE EUROPEAN SEARCH REPORT
## ON EUROPEAN PATENT APPLICATION NO.

EP 24 15 5653

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2024

| Patent document cited in search report | | Publication date | Patent family member(s) | | Publication date |
|---|---|---|---|---|---|
| WO 2022148593 | A1 | 14-07-2022 | CN | 116802681 A | 22-09-2023 |
| | | | EP | 4274997 A1 | 15-11-2023 |
| | | | US | 2024044498 A1 | 08-02-2024 |
| | | | WO | 2022148593 A1 | 14-07-2022 |
| US 2022381439 | A1 | 01-12-2022 | US | 2019234617 A1 | 01-08-2019 |
| | | | US | 2022381439 A1 | 01-12-2022 |
| WO 2020074478 | A1 | 16-04-2020 | CN | 112789447 A | 11-05-2021 |
| | | | EP | 3864346 A1 | 18-08-2021 |
| | | | US | 2021207811 A1 | 08-07-2021 |
| | | | WO | 2020074478 A1 | 16-04-2020 |

EPO FORM P0459

For more details about this annex : see Official Journal of the European Patent Office, No. 12/82